# EUROPEAN PATENT APPLICATION

(11) **EP 4 279 469 A1**
(43) Date of publication of application: **22.11.2023**
(21) Application number: 22173445.2
(22) Date of filing: 16.05.2022
(51) Int. Cl.: C04B 33/13, C04B 35/626, C04B 35/632, D04H 1/4209

(54) **MINERAL FABRIC**

(71) Applicant: Mühl Engineering Systems GmbH, 82031 Grünwald (DE)
(72) Inventor: MÜHL, Christian, 37431 Bad Lauterberg (DE); OSWALD, Arthur, 33098 Paderborn (DE)
(74) Representative: Weickmann & Weickmann PartmbB

(57) **Abstract**

The present invention refers to a process for preparing a mineral fabric, the mineral fabric obtained by this process and its use in fire protection for lightweight applications.

The process for preparing a mineral fabric comprises the steps of

(a) optionally dispersing at least one layered mineral in brine, preferably under shearing or stirring conditions,

(b) optionally washing the solid material obtained after step (a) in distilled water,

(c) dispersing at least one layered mineral or the solid material obtained after step (b) in an aqueous solution containing at least one organic cation such as organic phosphonium ions or organic ammonium ions,

(d) washing the solid material obtained after step (c) with distilled water,

(e) optionally shearing or milling the solid material obtained after step (d),

(f) dispersing the solid material obtained after step (d) or (e) and optionally at least one fibrous material in MC12 salt containing aqueous solution, and

(g) drying the solid material obtained after step (f) to form a fabric.

## Description

The present invention refers to a process for preparing a mineral fabric, the mineral fabric obtained by this process and its use for fire protection in lightweight applications.

Inorganic minerals are an indispensable part of everyday life, be it in the form of glass, porcelain, quartz watches, as construction material, etc. The materials are esteemed due to their cleaning ability, heat resistance, and mechanical strength. Disadvantages remain in their brittleness and the high temperatures required for their processing.

Many attempts have been made to provide new processes which can overcome the above-described drawbacks.

WO 2019/145070 discloses the manufacture of insulation panels comprising layered minerals. Sheets of modified layered silicates have been prepared and formed into a three-dimensional spatial structure, such as corrugated board, honeycomb-like structures etc. The modified layered silicates are prepared by replacement of the inorganic interlayer-cations by organic cations. The process aims to an almost complete exfoliation of the individual silicate layers and subsequent transfer into appropriate constructional units.

The increasing degree of exfoliation improves the quality of the obtained products, however, the handling of said silicate dispersions on an industrial scale is almost impossible, since the separation of the exfoliated silicates from the solvent is extremely time and/or energy consuming since conventional means, such as filtering, decanting, centrifugation, etc. of the ultra-fine particles is extremely difficult. For this reason, the complete solvent has to be removed by evaporation in order to form a solid structural element.

Ballard et al. (Journal of Material Science, Vol. 18, 1983, 545) deal with flexible films, foams and fiber coatings made of organically modified phyllosilicates and the mechanical properties thereof.

Minker-Villemin et al. (J. Mater. Res., 13, 1, 1998) describe the preparation and properties of flexible organically modified vermiculite films and investigate their dielectrical behavior.

US 4,800,041 describes alkyl ammonium modified vermiculite, alkyl ammonium modified mica, and products made therefrom.

All documents have in common that the preparation of the products requires enormous amounts of energy and/or time for making solid structural elements from the starting material (aqueous dispersions).

In view of sustainability considerations and energy savings, there is an urgent need to provide such flexible inorganic materials in a more straightforward process. Surprisingly, a more cost, energy and time efficient process for preparing mineral fabrics or three-dimensional structural elements has been found which moreover confers improved characteristics, such as flame retardancy and mechanical resistance, to such prepared products.

Thus, in a first aspect the present invention is directed to a process for preparing a mineral fabric comprising the steps of
(a) optionally dispersing at least one layered mineral in brine,
(b) optionally washing the solid material obtained after step (a) in distilled water,
(c) dispersing at least one layered mineral or the solid material obtained after step (b) in an aqueous solution containing at least one organic cation such as organic phosphonium ions or organic ammonium ions,
(d) washing the solid material obtained after step (c) with distilled water,
(e) optionally shearing or milling the solid material obtained after step (d),
(f) dispersing the solid material obtained after step (d) or (e) and optionally at least one fibrous material in MCl₂ salt containing aqueous solution, and
(g) drying the solid material obtained after step (f) to form a fabric.

"Fabric" in the sense of the present invention refers to a flexible (continuous) sheet or disc which can be rolled-up, embossed or stamped, at least to a certain extent.

The layered mineral used in step (a) or (c) is preferably selected from the group of layered silicates such as bentonite, clay, mica, smectite, vermiculite, montmorillonite, kaolinite, illite or muscovite.

Layered silicates are formed of planes of corner-connected SiO₄ tetrahedrons that acoomodate metal octahedrons in a sandwich fashion while the planes are not linked to each other by covalent SiO bonds but electrostatically by interlayer ions, mostly cations. In organically modified layered silicates, the cations in the intermediate layers are usually replaced by organic cations, such as organic ammonium or phosphonium compounds.

Step (a) particularly serves the purpose to replace the naturally occurring divalent magnesium ions by monovalent sodium ions which facilitates the subsequent replacement by organic cations in step (c).

The brine used in step (a) has preferably a concentration of 20-36 wt.-% of sodium chloride at 20°C. Preferably the brine used in step (a) is a saturated solution of sodium chloride at 20°C.

Step (a) is preferably performed at increased temperatures such as 50-90°C, preferably 50-80°C.

Step (a) is typically performed under shearing or stirring conditions. The shearing or stirring conditions are well-known to the skilled person and may be performed by means of paddle stirrer, magnetic stirrer, anchor stirrer, propeller stirrer, the optional use of baffles, etc., whereas shearing forces may ideally be introduced into the dispersions by suitable devices such as ultra turrax, high shear mixers, high pressure dispersers, etc.

The shearing or stirring conditions may be applied over a period of 15-60 minutes, preferably of 15-40 minutes.

In steps (a) or (c) suitable concentrations of layered minerals in the dispersion are independently in the range of 20-60 wt.-%, preferably 30-35 wt.-% based on the total weight of the dispersion. The respective concentrations allow reasonable viscosities for efficient cation exchange.

In optional step (b), the solid material obtained after step (a) is washed in distilled water. For this, the dispersion obtained after step (a) is preferably separated in a solid material fraction and a brine supernatant fraction, e.g. by filtration, sedimentation, decanting, pumping, skimming, etc. Subsequently, the solid material is redispersed in distilled water. The above steps may be repeated.

Thus, in a preferred embodiment, step (b) includes the following steps:
(b1) separating the solid material obtained after step (a) from brine,
(b2) dispersing the solid material obtained after step (b1) in distilled water,
(b3) separating the solid material obtained after step (b2) from wash water, and
(b4) optionally repeating steps (b2) and (b3).

Steps (b1) - (b3) can be performed as described above. Preferably, step (b4) is repeated until the wash water has a conductivity of less than 0.1 mS/cm.

In step (c), at least one layered mineral or the solid material obtained after step (b), (b3) or (b4) is dispersed in aqueous solution containing at least one organic cation such as organic phosphonium ions or organic ammonium ions.

Step (c) may be performed by first dispersing the at least one layered mineral or the solid material in distilled water and subsequently adding at least one organic cationic compound to the dispersion. Alternatively, the at least one layered mineral or the solid material may be dispersed in distilled water already containing at least one organic cationic compound.

Step (c) is preferably performed at increased temperatures above room temperature (20°C), preferably at temperatures of 50-90°C, more preferably of 50-70°C. Step (c) may be performed under shearing or stirring conditions as described above for step (a). The shearing and/or stirring conditions may last for a period of 15-60 minutes, preferably, 15-40 minutes.

Suitable organic phosphonium ions are selected from phosphonium butane or tetra(hydroxymethyl) phosphonium (including suitable counter ions, such as chloride). Suitable organic ammonium ions are selected from ammonium butane, diethyl ammonium or benzalkonium and may include suitable counter ions such as chloride.

If at least one organic cation is added in step (c) in form of an aqueous solution, the solution may be adjusted to a pH of 5-7. Adjustment of the pH is typically done with hydrochloric acid.

The amount of the at least organic cation used in step (c), preferably depends on the cation exchange capacity (CEC) of the layered mineral used in step (a) or (c). The cation exchange capacity (CEC) is a measure of how many cations can be retained in the layered mineral. Typically, the at least one organic cation is used in an amount of 350-450% of the cation exchange capacity of the layered mineral.

Usually, the concentration of the organic cation is in the range of 9.0-9.5 wt.-% based on the total weight of the dispersion.

In step (d), excess organic compounds are removed by washing the solid material obtained after step (c) with distilled water.

In a preferred embodiment, step (d) includes the following steps:
(d1) separating the solid material obtained after step (c),
(d2) dispersing the solid material obtained after step (d1) in distilled water,
(d3) separating the solid material obtained after step (d2) from wash water, and
(d4) optionally repeating steps (d2) and (d3).

Steps (d1) - (d3) may be performed as described above for steps (b1)-(b3). Step (d4) is particularly repeated until the wash water has a conductivity of less than or equal to 0.1 mS/cm.

In optional step (e), the solid material obtained after step (d) is sheared or milled. Step (e) particularly improves the exfoliation of the layered silicates. Step (e) may be performed in a dispersion, such as in an aqueous dispersion, preferably having a concentration of 5-10 wt.-% of solid material based on the total weight of the dispersion.

Step (e) may be performed with a high-shear mixer, a ball mill, an ultra turrax, a pearl mill, or a combination thereof. Step (e) may be performed at increased temperatures such as at temperatures of 50-90°C, more preferably 50-70°C.

After step (e), the dispersion particularly shows streaks, which indicate an effective exfoliation of the layered silicates. Such complete exfoliation is usually not obtained after step (d) but requires an additional shearing or milling step (e). Thus, in a preferred embodiment the process of the present invention comprises the steps
(a) optionally dispersing at least one layered mineral in brine,
(b) optionally washing the solid material obtained after step (a) in distilled water,
(c) dispersing at least one layered mineral or the solid material obtained after step (b) in an aqueous solution containing at least one organic cation such as organic phosphonium ions or organic ammonium ions,
(d) washing the solid material obtained after step (c) with distilled water,
(e) shearing or milling the solid material obtained after step (d),
(f) dispersing the solid material obtained after step (d) or (e) and optionally at least one fibrous material in MCl₂ salt containing aqueous solution, and
(g) drying the solid material obtained after step (f) to form a fabric.

The exfoliated organically modified silicates do not even precipitate after weeks and form a stable dispersion.

According to step (f), the solid material obtained after steps (d) or (d3) or (d4) or (e) is dispersed in MCl₂ salt containing aqueous solution. MCl₂ salt in the sense of the present invention means a chloride salt of bivalent metal M, such as Mg²⁺ or Ca²⁺. Preferably, MCI2 is CaCl₂.

The dispersion in step (f) may further contain at least one fibrous material. Suitable fibers may be of natural or synthetic origin. Preferred synthetic fibers may be polyethylene, polypropylene, polyvinyl alcohol. polyester, polyamide, polyacryl nitrile, polyvinyl chloride, polyurethane, elastane, aramide, rubber, viscose, carbon, glass and mineral fibers or carbon nanotubes. Preferred natural fibers may be cellulose or its derivatives, cotton, bamboo, hemp, wool, silk, coconut or mineral fibers. Preferably, the fibrous component is a cellulose fiber or a cellulose derivative fiber.

Step (f) may be performed by using the solid material after step (d) or (d3) or (d4) or (e) which is then redispersed, preferably to a concentration of 0.5-0.6 wt.-% of solid content based on the total weight of the dispersion. Redispersion may be performed in distilled water or in MCI2 containing aqueous solution.

Even more preferably, the dispersion obtained after step (d2) or (e) is directly used. The dispersion after steps (d2) or (e) may be adjusted to a concentration of 0.5-0.6 wt.-% of solid material based on the total weight of the dispersion with distilled water or MCI2 containing aqueous solution.

If distilled water is used for redispersion or concentration adjustment or if the dispersion obtained after step (d2) or (e) is directly used, MCl₂ salt may be added to the dispersion in solid form or in form of an aqueous solution. MCl₂ salt in the form of a solution or in solid form may be added in one or several steps.

MCl₂ salt is preferably added in an amount of more than or equal to 100%, more preferably in an amount of 100-600% of the cation exchange capacity of the layered mineral used in step (a) or (c).

Once, MCI2 is added in step (f), the dispersion may be stirred or sheared for a period of at least 48 hours, more preferably 48-72 hours.

In a preferred embodiment, the solid material obtained after step (d) or (e) and optionally at least one fibrous material is dispersed in MCI2 salt-containing solution by adding MCI2 salt in the form of a solution or in solid form in at least two separate steps. In the first step MCl₂ salt is added in an amount of 100-150% of the cation exchange capacity of the layered mineral used in step (a) or (c). Subsequently, the mixture is preferably stirred or sheared for 48-72 hours. In the second step MCl₂ salt is added in the form of a solution or in solid form in an amount of 200-500% of the cation exchange capacity of the layered mineral used in step (a) or (c).

Thus, the present invention is also directed to a process for preparing a mineral fabric comprising the steps of
(a) optionally dispersing at least one layered mineral in brine,
(b) optionally washing the solid material obtained after step (a) in distilled water,
(c) dispersing at least one layered mineral or the solid material obtained after step (b) in an aqueous solution containing at least one organic cation such as organic phosphonium ions or organic ammonium ions,
(d) washing the solid material obtained after step (c) with distilled water,
(e) optionally shearing or milling the solid material obtained after step (d),
(f) dispersing the solid material obtained after step (d) or (e) and optionally at least one fibrous material in MCl₂ salt containing aqueous solution, wherein
   (f1) MCl₂ salt is added in an amount of 100-150% of the cation exchange capacity of the layered mineral used in step (a) or (c) and the mixture is stirred or sheared for a period of 48-72 hours; and
   (f2) MCl₂ salt is added in an amount of 200-500% of the cation exchange capacity of the layered mineral used in step (a) or (c); and
(g) drying the solid material obtained after step (f) to form a fabric.

After step (f), the solid material optionally including the fibrous material flocculates and/or precipitates.

The drying step (g) may then be performed by filtration, sedimentation, decanting, centrifugation or evaporation on an industrial scale level. Notably, most of the solvent can be removed by conventional separation techniques, such as filtering, so that only a minimum of energy is required to evaporate the remaining solvent in step (g) or (h).

The solid material may be processed, such that the fabric is directly obtained after step (g). Surprisingly, filtration may be performed on conventional sieves as e.g. used in paper industry. The process of the invention thus enables a large-scale drying of the solid material to form a fabric. Preferably, the material after step (f) is processed similar to paper pulp in paper machines, being subjected to e.g. a forming section, a press section and a drying section.

The above process thus, enables a continuous production of mineral fabric.

In optional step (h), the obtained fabric might be further dried at increased temperatures, such as at 30-120°C.

The fabric preferably has a thickness of 0.1-0.6 mm.

The fabric may have dimensions of 0.02-2 m² or is a continuous fabric.

The fabric may have a humidity of 2-8 wt.-% based on the total weight after step (g) or (h).

In a further aspect, the present invention relates to a fabric obtainable by the above-described method.

Preferably, the fabric has heat conductance of 0.01-0.07 W/mK.

Moreover, it has been observed that the fabric according to the invention has improved mechanical properties as compared to layered mineral sheets manufactured without step (f). Thus, in a preferred embodiment, the fabric according to the invention has a modulus of 800-1000 MPa measured based on DIN EN ISO 527-1.

The fabric according to the invention further fulfills the criteria of reaction to fire classification A1 according to DIN EN 13501-1.

In a further aspect, the present invention refers to the use of the fabric according to the invention for lightweight fire protection materials.

The present invention is illustrated in more detail by the following example:

### Example

In a 1 liter reactor, 333 g vermiculite superfine (purchased by WOLFF & MULLER, cation exchange capacity of 80 meq/100g) have been mixed with 667 g of saturated brine at 70°C for 30 minutes. The solid material precipitates and is separated from the supernatant by a funnel. The solid material is washed with 5 liters of distilled water. Again, the solid material is separated from the supernatant and is washed until the supernatant has an electrical conductivity of less than 0.1 mS/cm. The solid material is dispersed in 667 g of a 2 M butylammonium chloride solution which has been adjusted to a pH of 6 with conc. HCI. The mixture is stirred at 20°C for 30 minutes and was stored overnight.

The solid material is separated from the supernatant by a funnel. The wet solid is dispersed in 5 liters of distilled water and stirred. The washing process is repeated until the supernatant has an electrical conductivity of less than 0.1 mS/cm.

The solid material is again dispersed in distilled water (6.4 wt.-% of solid material based on the total weight of the dispersion) and treated with a ball mill (purchased by Haldenwanger) with a volume of approx. 6 I, 3.15 kg aluminium oxide balls with 1 cm diameter, 1 kg dispersion) for 30 minutes with 100 rpm at room temperature. The mixture is sieved (0.5 mm), diluted to 3.0 wt.-%, and split into two aliquants.

One aliquant is diluted to 0.6 wt.-% by adding 415 g of distilled water to 104 g of the 3 wt.-% vermiculite dispersion. 0.20 g CaCl₂ (approx. 145% of CEC) are added and the mixture is stirred for 48 hours. Then, another 0.30 g of CaCl₂ are added under stirring (now approx. 360% of CEC). The solid flocculates in both steps and is separated from the aqueous supernatant by a sieve having a mesh width of 0.3 mm. The obtained fabric is dried at r.t. in a fume cupboard. The resulting grammage is approx. 160 g/m².

The other aliquant (without calcium chloride precipitation) is applied on a flat plastic tray (33x22 cm, 394 g of 3 wt.-% vermiculite dispersion) and the complete solvent is evaporated at r.t. in a fume cupboard to form a fabric. Filtration of the fine dispersion via sieve or filter is not possible. The resulting grammage is approx. 160 g/m².

Both fabrics (with and without CaCl₂ precipitation) are subjected to a modulus measurement in line with DIN EN ISO 527-1. For this, the fabric is punched in rectangles. Both samples have a thickness of approx.0.1 mm. While the E-modulus of the fabric of the calcium chloride precipitated material is in the range of 750 ± 60 MPa, the E-modulus of the fabrics without CaCl₂ precipitation is about 125 ± 15 MPa.

Thus, the method according to the present invention provides high modulus fabrics.

The samples have further been subjected to a fire test based on DIN EN ISO 1182. The films have been exposed to 750°C in a muffle furnace. Inflammation of the sample does not occur in fabrics according to the invention, whereas the enduring inflammation of the fabric without CaCl₂ precipitation takes 18 seconds, with both films weighing 2.5 g. Thus, the fire resistance of the fabrics according to the invention is improved over the layered silicate fabrics not being subjected to a MCl₂ ion exchange.

The present invention is further defined by the following items:
1. Process for preparing a mineral fabric comprising the steps of
   (a) optionally dispersing at least one layered mineral in brine,
   (b) optionally washing the solid material obtained after step (a) in distilled water,
   (c) dispersing at least one layered mineral or the solid material obtained after step (b) in an aqueous solution containing at least one organic cation such as organic phosphonium ions or organic ammonium ions,
   (d) washing the solid material obtained after step (c) with distilled water,
   (e) optionally shearing or milling the solid material obtained after step (d),
   (f) dispersing the solid material obtained after step (d) or (e) and optionally at least one fibrous material in MCl₂ salt containing aqueous solution, and
   (g) drying the solid material obtained after step (f) to form a fabric.
2. Process according to claim 1, wherein the layered mineral used in step (a) or step (c) is selected from the group consisting of layered silicates such as bentonite, clay, mica, smectite, vermiculite, montmorillonite, kaolinite, illite or muscovite.
3. Process according to item 1 or 2, wherein step (a) is conducted at increased temperatures, such as 50-90°C.
4. Process according to any of the preceding items, wherein step (a) is conducted under shearing or stirring conditions, particularly over a period of 15-60 min.
5. Process according to any of the preceding items, wherein the concentration of layered mineral in the dispersion in step (a) or (c) is in the range of 20-60 wt.-%, preferably 30 - 35 wt.-% based on the total weight of the dispersion.
6. Process according to any of the preceding items, wherein the brine has a concentration of 20-36 wt.-% of sodium chloride, preferably is a saturated solution of sodium chloride, at 20°C.
7. Process according to any of the preceding items, wherein step (b) includes the following steps:
   (b1) separating the solid material obtained after step (a) from brine,
   (b2) dispersing the solid material obtained after step (b1) in distilled water,
   (b3) separating the solid material obtained after step (b2) from wash water, and
   (b4) optionally repeating steps (b2) and (b3).
8. Process according to item 7, wherein step (b4) is repeated until the wash water has a conductivity of less than or equal to 0.1 mS/cm.
9. Process according to any of the preceding items, wherein step (c) is performed at 50-90°C, such as 50-70°C.
10. Process according to any of the preceding items, wherein step (c) is performed under shearing and/or stirring, particularly over a period of 15-60 min.
11. Process according to any of the preceding items, wherein the organic phosphonium ions are selected from phosphonium butane, or tetra(hydroxymethyl)phosphonium.
12. Process according to any of the preceding items, wherein the organic ammonium ions are selected from ammonium butane, diethyl ammonium, or benzalkonium.
13. Process according to any of the preceding items, wherein the aqueous solution in step (c) is adjusted to a pH of 5-7, e.g. with hydrochloric acid.
14. Process according to any of the preceding items, wherein the concentration of the organic cation is in the range of 9.0 - 9.5 wt.% based on the total weight of the dispersion.
15. Process according to any of the preceding items, wherein the at least one organic cation is present in step (c) in an amount of 350 - 450 % of the cation exchange capacity of the layered mineral.
16. Process according to any of the preceding items, wherein step (d) includes the following steps:
   (d1) separating the solid material obtained after step (c),
   (d2) dispersing the solid material obtained after step (d1) in distilled water,
   (d3) separating the solid material obtained after step (d2) from wash water, and
   (d4) optionally repeating steps (d2) and (d3).
17. Process according to item 16, wherein step (d4) is repeated until the wash water has a conductivity of less than or equal to 0.1 mS/cm.
18. Process according to any of the preceding items, wherein the solid material in step (e) is dispersed in distilled water prior to shearing.
19. Process according to item 18, wherein the solid content in the dispersion in step (e) is 5 -10 wt.-% based on the total weight of the dispersion.
20. Process according to any of the preceding items, wherein step (e) is performed with a high shear mixer, a ball mill, a pearl mill, an ultra-turrax, or a combination thereof.
21. Process according to any of the preceding items, wherein the solid content in the dispersion in step (f) is 0.5 - 0.6 wt.-% based on the total weight of the dispersion.
22. Process according to any of the preceding items, wherein the dispersion in step (f) contains MCl₂ in an amount of more than or equal to 100% of the cation exchange capacity of the layered mineral used is step (a) or (c).
23. Process according to any of the preceding items, wherein the addition of MCl₂ can be performed in several steps.
24. Process according to item 23, wherein the dispersion is stirred and/or sheared after addition of CaCl₂ for a period of at least 48 hours, preferably 48-72 h.
25. Process according to any of the preceding items, wherein the drying step (g) includes evaporation, filtration, sedimentation, or centrifugation.
26. Process according to any of the preceding items which comprises an additional step
   (h) drying the fabric at increased temperatures, such as 30-120°C.
27. Process according to any of the preceding items, wherein the fabric has a thickness of 0.1 - 0.6 mm.
28. Process according to any of the preceding items, wherein the fabric has dimensions of 0.02-2 m² or is continuous.
29. Process according to any of the preceding items, wherein the fabric has a humidity of 2 - 8 wt.-% based on the total weight after step (g) or (h).
30. Fabric obtainable by a method according to any of items 1-29.
31. Fabric according to item 30 which has a heat conductance of 0.01-0.07 W/mK.
32. Fabric according to item 30 or 31 which has a modulus of 800-1000 MPa measured according to DIN EN ISO 527-1.
33. Fabric according to any of items 30-32 which fulfills the criteria of reaction-to fire classification A1 according to DIN EN 13501-1.
34. Use of a fabric according to any of items 30-33 for lightweight fire protection materials.

## Claims

1. Process for preparing a mineral fabric comprising the steps of
(a) optionally dispersing at least one layered mineral in brine, preferably under shearing or stirring conditions,
(b) optionally washing the solid material obtained after step (a) in distilled water,
(c) dispersing at least one layered mineral or the solid material obtained after step (b) in an aqueous solution containing at least one organic cation such as organic phosphonium ions or organic ammonium ions,
(d) washing the solid material obtained after step (c) with distilled water,
(e) optionally shearing or milling the solid material obtained after step (d),
(f) dispersing the solid material obtained after step (d) or (e) and optionally at least one fibrous material in MCl₂ salt containing aqueous solution, and
(g) drying the solid material obtained after step (f) to form a fabric.

2. Process according to claim 1, wherein the layered mineral used in step (a) or step (c) is selected from the group consisting of layered silicates such as bentonite, clay, mica, smectite, vermiculite, montmorillonite, kaolinite, illite or muscovite.

3. Process according to any of the preceding claims, wherein the concentration of layered mineral in the dispersion in step (a) or (c) is in the range of 20-60 wt.-%, preferably 30 - 35 wt.-% based on the total weight of the dispersion.

4. Process according to any of the preceding claims, wherein the organic phosphonium ions are selected from phosphonium butane, or tetra(hydroxymethyl)phosphonium and/or wherein the organic ammonium ions are selected from ammonium butane, diethyl ammonium, or benzalkonium.

5. Process according to any of the preceding claims, wherein the at least one organic cation is present in step (c) in an amount of 350 - 450 % of the cation exchange capacity of the layered mineral.

6. Process according to any of the preceding claims, wherein step (d) includes the following steps:
(d1) separating the solid material obtained after step (c),
(d2) dispersing the solid material obtained after step (d1) in distilled water,
(d3) separating the solid material obtained after step (d2) from wash water, and
(d4) optionally repeating steps (d2) and (d3),
wherein step (d4) is preferably repeated until the wash water has a conductivity of less than or equal to 0.1 mS/cm.

7. Process according to any of the preceding claims, wherein the solid content in the dispersion in step (f) is 0.5 - 0.6 wt.-% based on the total weight of the dispersion.

8. Process according to any of the preceding claims, wherein the dispersion in step (f) contains MCl₂ in an amount of more than or equal to 100% of the cation exchange capacity of the layered mineral used is step (a) or (c).

9. Process according to claim 8, wherein the dispersion is stirred and/or sheared after addition of CaCl₂ for a period of at least 48 hours, preferably 48-72 h.

10. Process according to any of the preceding claims, wherein the drying step (g) includes evaporation, filtration, sedimentation, or centrifugation.

11. Process according to any of the preceding claims which comprises an additional step
(h) drying the fabric at increased temperatures, such as 30-120°C.

12. Fabric obtainable by a method according to any of claims 1-11.

13. Fabric according to claim 12 which has a modulus of 800-1000 MPa measured according to DIN EN ISO 527-1.

14. Fabric according to any of claims 12-13 which fulfills the criteria of reaction-to fire classification A1 according to DIN EN 13501-1.

15. Use of a fabric according to any of claims 12-14 for lightweight fire protection materials.
